# EUROPEAN PATENT SPECIFICATION

(11) **EP 3 230 649 B1**
(45) Date of publication and mention of the grant of the patent: **28.06.2023**
(21) Application number: 15866795.6
(22) Date of filing: 11.12.2015
(51) Int. Cl.: F17C 7/04, F17C 9/02, F17C 13/08

(54) **SYSTEM AND METHOD FOR MANIFOLDING PORTABLE CRYOGENIC CONTAINERS**
SYSTEM UND VERFAHREN ZUR VERROHRUNG VON TRAGBAREN KRYOGENEN BEHÄLTERN
SYSTÈME ET PROCÉDÉ POUR LA COLLECTE DE CONTENANTS CRYOGÉNIQUES PORTABLES

(30) Priority: 12.12.2014 US 201462091139 P
(43) Date of publication of application: 18.10.2017
(73) Proprietor: Chart Inc., Ball Ground, GA 30107 (US)
(72) Inventor: DRUBE, Tom, Ball Ground, GA 30107 (US)
(74) Representative: Slingsby Partners LLP
(86) International application number: PCT/US2015/065361
(87) International publication number: WO 2016/094852

(56) References cited:
- EP-A1- 0 632 226
- EP-A1- 1 756 468
- US-A- 5 127 230
- US-A- 5 537 824
- US-A1- 2006 218 941
- US-A1- 2014 096 539
- US-A1- 2014 311 591

## Description

This application claims priority to co-pending US Patent Application Serial No. 62/091,139 entitled "System for Manifolding Portable Cryogenic Containers", filed on December 12, 2014. Priority to the aforementioned filing date is claimed.

### BACKGROUND

Interest in the use of liquid natural gas (LNG) as a fuel for motor vehicles or other devices has increased dramatically in recent years. LNG is relatively inexpensive and provides an alternative to fuel oil from foreign sources. In addition, it burns very cleanly, making it much easier for fleets to meet more restrictive pollution emission standards. A rail locomotive is one type of vehicle that utilizes LNG as a fuel. The rail locomotive hauls a tender car, or rail tender, that contains the locomotive's LNG for fuel. There are various ways to provide the LNG from the rail tender to the locomotive's engine. US 5537824 describes a fueling system for LNG powered vehicles which includes a storage vessel which functions as a pusher tank to fill two fuel supply tanks with LNG and which can receive vapor build-up from the tanks, such that the pressure and temperature of the fuel supply tanks can be raised or lowered as dictated by the needs of the system. EP 0632226 describes a method for a cryogenic storage and delivery system in which a subcooled liquid is used to wash contaminants to the bottom of a tank. WO 2005/119121 describes a system for high flow delivery of a liquid, such as liquid ammonia, to a flat display panel manufacturing location.

### SUMMARY

Disclosed are various embodiments of a cryogenic fluid delivery manifold system that includes a plurality of cryogenic tanks and a first, liquid flow manifold that permits flow of liquid to a use device, and a second, vapor pressure manifold through which vapor flows for regulating and/or balancing pressure across the plurality of tanks. The vapor pressure manifold is also fluidly coupled to a pusher tank, as described below.

A cryogenic fluid supply system is disclosed as set out in claim 1.

The details of one or more variations of the subject matter described herein are set forth in the accompanying drawings and the description below. Other features and advantages of the subject matter described herein will be apparent from the description and drawings, and from the claims.

### BRIEF DESCRIPTION OF THE DRAWINGS

Figure 1 shows a schematic representation of a prior art manifold system where multiple containers are fluidly connected to a single fluid line that provides for fluid to a use device.
Figure 2 shows an example of an improved manifold system which is useful for understanding the invention.
Figure 3 shows a first embodiment of a manifold system.
Figure 4 shows a second embodiment of a manifold system.

### DETAILED DESCRIPTION

Before the present subject matter is further described, it is to be understood that this subject matter described herein is not limited to particular embodiments described, as such may of course vary. It is also to be understood that the terminology used herein is for the purpose of describing particular embodiments only, and is not intended to be limiting. Unless defined otherwise, all technical terms used herein have the same meaning as commonly understood by one skilled in the art to which this subject matter belongs.

One way to provide LNG from a rail tender to a locomotive's engine is to provide a pump that is submersed within LNG in a tank of the rail tender. The pump is configured to pump the LNG to the locomotive when pressure within the tank is insufficient to drive LNG to the engine based on pressure alone. When pressure in the tank is sufficient, LNG can be driven to the locomotive by tank pressure alone through the pump. Such systems include an economizer circuit that is used to relieve high pressure within the tank. The economizer circuit typically includes a regulator that allows vapor from the tank to be delivered to the locomotive when the pressure in the tank rises above a predetermined level. By pulling vapor from the tank, the pressure in tank falls dramatically and pressure within the tank is relieved.

Another type of system is a saturation delivery style system that requires the LNG to be saturated (warmed) to a boiling pressure slightly above the operational input pressure to the engine, which may be in the range of 125-135 psig (approx. 862-931 kPa) for example. Once saturated, the LNG is of sufficient pressure to enable pressure transfer of the LNG to the locomotives of the rail system. Such systems can also include an economizer circuit that is used to relieve high pressure within the tank. The economizer circuit typically includes a regulator that allows vapor from the tank to be delivered to the locomotive when the pressure in the tank rises above a predetermined level. By pulling vapor from the tank, the pressure in tank falls dramatically and pressure within the tank is relieved.

Of particular interest is the use of ISO (International Standards Organization) or other type of portable containers (or tanks) for storing the LNG. One issue that arises is the total heat management of the LNG to control boil off gas. It is good value proposition to avoid the amount of handling and trans filling of the LNG to the tanks as each of these efforts add thermodynamic heat to the LNG, which reduces hold time and creates potential venting of the boil off gas. Using ISO containers directly for storage and delivery to a use device avoids additional handling, which is costly, increases spill potentials and adds heat.

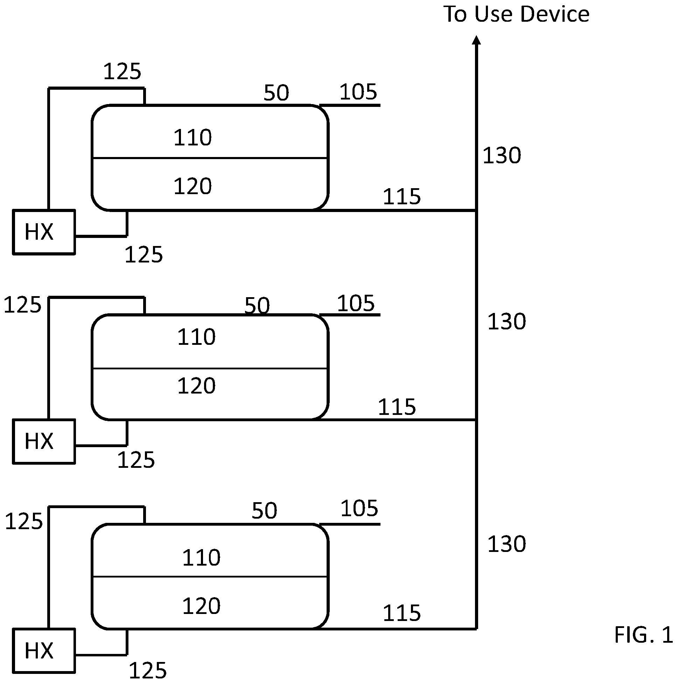

If a use device requires relatively small flow rates and small aggregate storage, the use of only a single ISO container may well represent an attractive and cost effective option. However, multiple containers may be required where flow rates, aggregate storage and requirements for uninterrupted service are present. Accordingly it is desirable to connect multiple ISO containers (or other types of containers) to a single gas use line and allow each container to supply gas to the single, common line and to the use device. This is referred to as a manifolded system such as shown in Figure 1.

A typical ISO container configuration is horizontal in design. That is, the container is wider than it is tall. This is required so the package is easily transportable. As shown in Figure 1, the system includes a plurality of supply tanks 50. Each tank 50 contains a cryogenic product, such as liquid natural gas (LNG), that includes liquid cryogen 120 with vapor space or vapor side 110 above the liquid cryogen within the tank.

Each container or tank 50 also has a pipe (or "line") 105 fluidly connected to the vapor side 110 (or upper portion) of the tank 50 and a pipe (or "line") 115 to the liquid side 120 (or lower portion) of the tank as shown in Figure 1 where the pipes are schematically represented. The lines 115 each connect to a manifold that connects the lines 115 common use line 130 that is fluidly coupled to a use device, such as an engine. Thus, a manifold system connects the lines 115 to the use line 130. Each pipe defines an internal conduit through which fluid may flow. These pipes (or lines) are used to fill fluid and to withdraw fluid from the tank. The system may also include additional, dedicated pipes for filling the container with fluid and other lines for withdrawal of fluid from the tank. As used herein, a "line" or "pipe" can be any type of tubing or piping with an internal lumen through which fluid can flow. Any of the lines can include one or more flow regulators, pressure regulators, and/or valves.

In addition to the fill pipes/withdrawal pipes 105/115 there is often a pressure building system. This pressure building system includes a pipe 125 fluidly connected to the liquid portion 120 of the tank 50. In an embodiment, the pipe 125 extends downward from the liquid portion 120 such that gravity can cause fluid to flow into the pipe 125. The pipe 125 directs fluid flow (of liquid from the tank) to a heat exchanger HX, which is located along the pipe 125 and gassifies the liquid. Each pipe 125 may also include a pressure regulator. The pipe 125 directs the gasified liquid back to the top of the tank 50 after the liquid is gasified by the heat of the heat exchanger HX. One or more pumps can be coupled to any of the pipes of the system for propelling fluid. The system may also include automated flow control devices, such as one or more controllers coupled to one or more valves and/or pumps for causing and controlling flow of fluid to and from the system. When the pressure building system is open, liquid is allowed to flow by gravity through the pipe 125 to the heat exchanger HX where it boils to vapor and is returned to the vapor portion 110 of the tank via the pipe 125 fluidly coupled to the vapor region of the tank 50. This effectively increases the tank pressure. This is important to establish and maintain flow from the tank. It creates make-up volume to allow the customer to remove liquid from the tank and maintain use pressure.

A challenge with a typical portable (ISO) container is the relatively low height of the tank since it is horizontal. This means there is little head pressure or push in the tank to force liquid through the system. Further, the available space for the heat exchange on a portable system makes the amount of heat for boiling limited. The total withdrawal capacity of portable systems are both relative low and also slow in correcting pressure.

For a system with multiple containers on a single use line 130, where each tank supplies its own pressure building as shown in Figure 1, certain problems exist. For example, pressure in the containers 50 rarely balance across the containers because pressure build lines dedicated to each tank will perform differently. In addition, different tanks 50 can be at different use levels (i.e., a different liquid head or different level of liquid) based on when they were attached to the manifold and how much use has occurred. Moreover, use demands on active tanks in the system fluctuate as additional tanks come on and off line. The resulting pressure imbalance allows the flow to the use device (e.g., an engine) to become erratic as flows drive into and out of tanks of differing pressures. This also creates additional system heat that can potentially lead to overall heat management issues and eventually venting.

Another performance problem is that newly attached tanks to the manifold system need to be allowed to pressurize to the use pressure before being opened to the manifold. The use of check valves on the discharge connections can assist, but pressure build imbalance will force uneven withdrawal increasing the activity level of tank connections and removal so the highest pressure tank will drain first. This may cause tank management issues as it may be desirable to have certain windows during the day when tank swapping is affected.

In addition, tanks that are effectively empty will have residual vapor at use pressure in them. The pressure at which the container is to be moved may well need to be at a lower pressure. Removal of the last pressure in the tank by venting is undesirable.

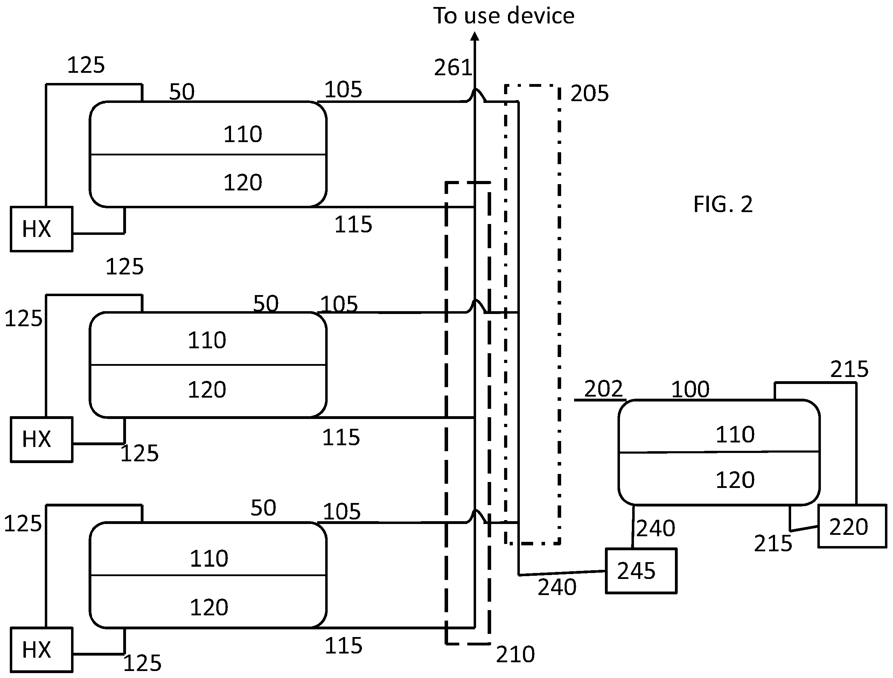

To overcome these drawbacks, disclosed are various embodiments of a cryogenic fluid delivery manifold system that includes a first manifold that permits flow of liquid flow to the use device, and a second, vapor pressure manifold through which vapor flows. Figure 2 shows an unclaimed example of a system that includes a plurality of tanks 50. The tanks 50 are arranged according to the environment of Figure 1 and the description of the environment in figure 1 is also to Figure 2. As discussed above with reference to Figure 1, each tank 50 can include a cryogenic liquid 120 above which is located a vapor space 110. A vapor line 105 communicates with the vapor space 110 and permits vapor flow through the vapor line 105. The vapor lines 105 are fluidly connected to one another via a vapor manifold 205 that fluidly connects the vapor lines 105 to a pusher tank 100 (such as an ISO container). The vapor manifold 205 also fluidly couples the vapor lines of the supply tanks to a pusher line that communicates with the liquid of the pusher tank, the pusher line (240) including a vaporizer that vaporizes liquid from the pusher tank, as described below. The pusher tank 100 can include a supply line 202 that communicates with the internal space of the pusher tank to fill the tank with fluid.

With reference still to Figure 1, each tank 50 also includes a liquid line 115 that communicates with the respective liquid 120 in the tank. The liquid lines 120 are fluidly connected to one another via a liquid manifold 210. The liquid manifold 210 is fluidly connected to a use line through which fluid from the lines 115 can flow toward the use device. Thus, the liquid manifold communicates with a use line 261 that is configured to be connected to a use device.

The system further includes a pressure build tank 100 dedicated on the vapor manifold 205 as a dedicated pusher tank that acts solely to supply vapor pressure to each of the tanks. Thus, the tank 100 acts as a pusher tank for providing the pressure for the system. With reference to figure 2, the tank 100 includes a dedicated pressure building system formed of a pressure line 215 that communicates on one end with the liquid space 120 of the tank, and on another end with the vapor space 110 of the tank 100. A pressure regulator can be positioned along the pressure line 215. A first vaporizer 220, such as a heat exchanger, is positioned along the line 215 to vaporize liquid from the liquid space 120 and directed back toward the vapor space 110 of the pusher tank for pressurizing the pusher tank 100. Thus, the line (or pipe) 215 extends downward from the liquid portion 120 such that gravity can cause fluid to flow into the pipe 215. The pipe 125 directs fluid flow (of liquid from the tank) to the heat exchanger 220, which is located along the pipe 215 and gassifies the liquid. The pipe 215 then directs the gasified liquid back to the top of the tank 100 after the liquid is gasified by the heat of the heat exchanger 220. One or more pumps can be coupled to any of the pipes of the system for propelling fluid.

Thus, the tank 100 uses its own pressure building circuit to maintain its own pressure. The tank 100 is also coupled to a pusher line 240 that includes a dedicated pusher vaporizer 245. The pusher line 240 communicates with and extends out of the liquid space 120 of the pusher tank and directs liquid from the tank 100 to the vaporizer 245. The vaporizer 245 vaporizes liquid from the pusher tank 100. The vapor discharge from the vaporizer 245 communicates to the vapor manifold 205, which also communicates with the vapor lines 105 of the tanks 50. The system permits the pressure of a newly added tank to be coupled to the manifold 205 thus quickly establishing a newly added tank to the use pressure. In this regard, the manifolds 205 and 210 can each include one or more coupling mechanisms that permit one or more additional tanks to be fluidly coupled system. In addition, the pressure in all of the ISO tanks 50 is coordinated and the withdrawal from the system can be managed by virtue of the vapor manifold 205.

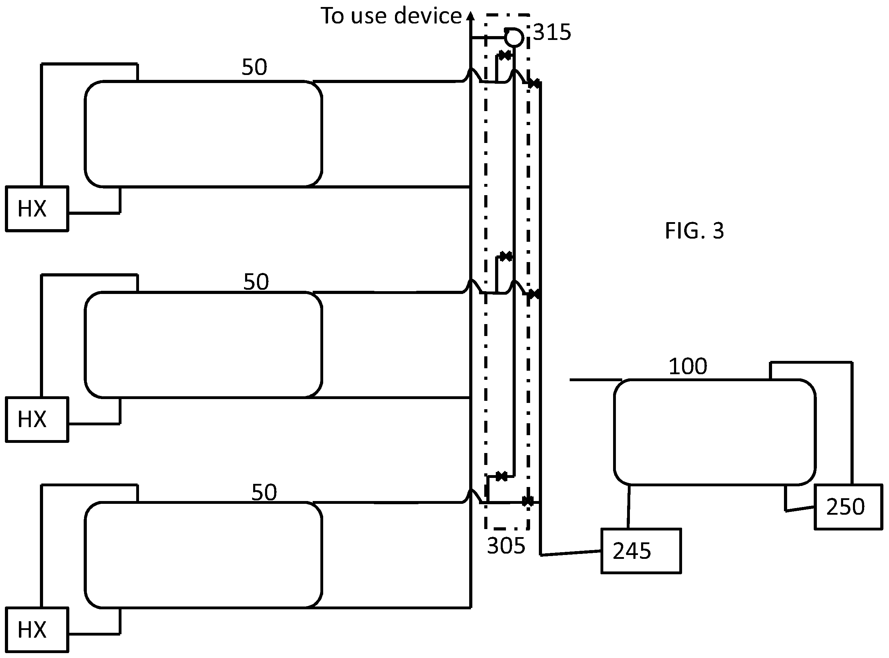

Figure 3 shows an embodiment that includes a scavenging compressor manifold 305 that is fluidly positioned in parallel fluid communication with the vapor manifold 205. This system is substantially the same as of system in figure 2 except that it includes a compressor manifold 305 that includes a line 310 that communicates with a scavenging compressor 315. The manifold 305 is fluidly connected to a vapor manifold 205 that is configured as shown in Figure 2. When a tank 50 is empty, the vapor from the vapor side 110 of each tank is re-directed to the scavenging compressor 305 via the vapor manifold 205 and the compressor manifold 305, which are both fluidly connected to the compressor 315. The compressor can pressurize the vapor lines of the supply tanks. An empty tank can be depressurized by forcing its residual gas to the use line and avoid venting.

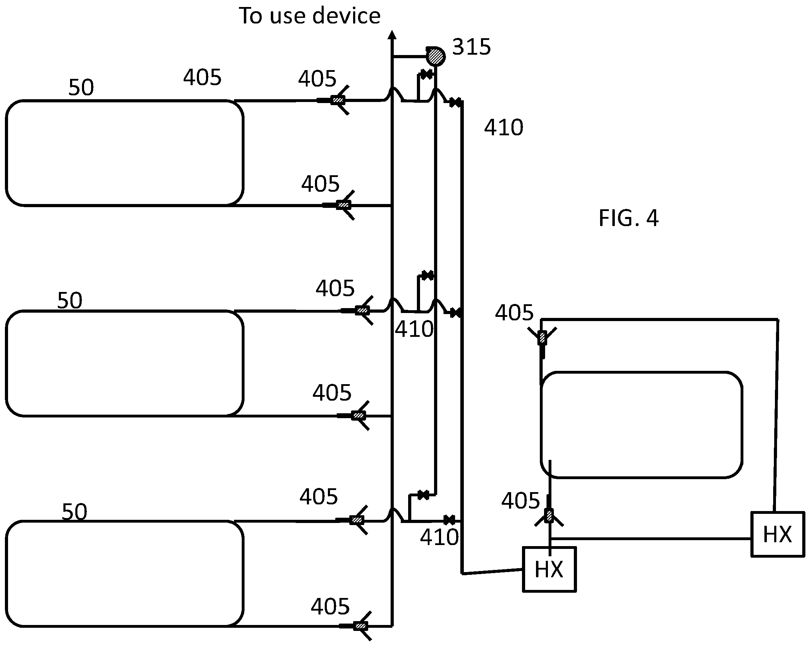

Figure 4 shows an additional embodiment, where the tanks 50 do not include a dedicated pressure building circuit. The lack of a pressure building circuit on each tank can save weight, cost, leak potentials and complexity with respect to the previous embodiments. As shown in Figure 4, a dry break style coupling 405 can be used on the manifold where a cheaper, lighter, receptacle side is on the ISO container and the more expensive nozzle is on the manifold. In addition, control valves 410 can be mounted to the manifold side to simplify the containers. The container level can be monitored at the manifold such as by differential pressure, load cells or other means to detect gas flow from the ISO container.

Although embodiments of various methods and devices are described herein in detail with reference to certain versions, it should be appreciated that other versions, embodiments, methods of use, and combinations thereof are also possible. Therefore, the scope of the appended claims should not be limited to the description of the embodiments contained herein.

## Claims

1. A cryogenic fluid supply system, comprising:
a plurality of cryogenic supply tanks (50), wherein each supply tank includes:
a. a cryogenic liquid (120) and a vapor (110) above the liquid;
b. a vapor line (105) having a first end fluidly coupled with the vapor of the tank;
c. a liquid line (115) having a first end fluidly coupled with the liquid of the tank;
a pusher tank (100) arranged to supply vapor pressure to the supply tanks and that contains a cryogenic liquid and a vapor above the liquid;
a vapor manifold (205) that fluidly couples the vapor lines of the supply tanks to one another and also fluidly couples the vapor lines of the supply tanks to a pusher line (240) fluidly coupled with the liquid of the pusher tank, the pusher line including a first, pusher vaporizer (245) arranged to vaporize liquid from the pusher tank; and
a liquid manifold (210) that fluidly couples the liquid lines of the supply tanks to one another, wherein the liquid manifold fluidly couples with a use line (130) that is configured to be connected to a use device to deliver cryogenic liquid from the supply tanks when so connected,
wherein
the pusher tank includes a dedicated pressure building system formed of a pressure line (215) fluidly coupled on one end with the liquid of the pusher tank, and on another end with the vapor of the pusher tank, the dedicated pressure building system also including a second vaporizer (220) positioned along the pressure line to vaporize liquid from the pusher tank and direct the vaporized liquid back to the vapor in the pusher tank for pressurizing the pusher tank;
and wherein the system further comprises:
a compressor manifold (305) to the plurality of supply tanks, the compressor manifold being fluidly coupled in parallel with the vapor manifold; and
a compressor (315) fluidly coupled between the use line and a line (310) of the compressor manifold, and such that the compressor is selectively coupleable to each vapor line,
wherein the compressor is configured, when coupled to a vapor line of one of the plurality of supply tanks, which supply tank is depleted of liquid, to depressurize the vapor line and thereby direct residual vapor from the supply tank to the compressor so as to force the residual vapor from the supply tank to the use line, such that the supply tank is depressurized.

2. A system as in claim 1, wherein each of the supply tanks is an ISO (International Organization for Standardization) tank.

3. A system as in claim 1 or 2, wherein each supply tank includes a pressure building system formed of a pressure line (125) that fluidly couples on one end with the liquid of the supply tank, and on another end with the vapor of the supply tank, the pressure building system also including a vaporizer positioned along the pressure line to vaporize liquid from the supply tank and direct the vaporized liquid back to the vapor in the supply tank for pressurizing the supply tank.

4. A system as in any preceding claim, wherein the compressor manifold fluidly couples the vapor manifold to the compressor such that the compressor can pressurize the vapor lines of the supply tanks.

5. A system as in any preceding claim, wherein the second vaporizer is a heat exchanger.

6. A system as in any preceding claim, wherein the first pusher vaporizer is a heat exchanger.

7. A system as in any preceding claim, further comprising at least one pressure regulator on the pressure line of the pusher tank.

8. A system as in any preceding claim, wherein the cryogenic fluid is liquid natural gas.

9. A system as in any preceding claim, wherein the pressure line of the pusher tank extends downwardly from the liquid in the pusher tank.

## Patentansprüche

1. Versorgungssystem für kryogenes Fluid, umfassend:
eine Vielzahl von kryogenen Versorgungstanks (50), wobei jeder Versorgungstank Folgendes umfasst:
a. eine kryogene Flüssigkeit (120) und einen Dampf (110) über der Flüssigkeit;
b. eine Dampfleitung (105) mit einem ersten Ende, das in Fluidverbindung mit dem Dampf des Tanks steht;
c. eine Flüssigkeitsleitung (115) mit einem ersten Ende, das strömungsmittelmäßig mit der Flüssigkeit des Tanks verbunden ist;
einen Schubtank (100), der so angeordnet ist, dass er den Versorgungstanks Dampfdruck zuführt und der eine kryogene Flüssigkeit und einen Dampf über der Flüssigkeit enthält;
einen Dampfverteiler (205), der die Dampfleitungen der Versorgungstanks fluidmäßig miteinander koppelt und außerdem die Dampfleitungen der Versorgungstanks fluidmäßig mit einer Schubleitung (240) koppelt, die fluidmäßig mit der Flüssigkeit des Schubtanks gekoppelt ist, wobei die Schubleitung einen ersten Schubverdampfer (245) enthält, der angeordnet ist, um Flüssigkeit aus dem Schubtank zu verdampfen; und
einen Flüssigkeitsverteiler (210), der die Flüssigkeitsleitungen der Versorgungstanks fluidmäßig miteinander koppelt, wobei der Flüssigkeitsverteiler fluidmäßig mit einer Verbrauchsleitung (130) gekoppelt ist, die konfiguriert ist, um mit einer Verbrauchsvorrichtung verbunden zu werden, um kryogene Flüssigkeit aus den Versorgungstanks zu liefern, wenn sie so angeschlossen ist,
wobei der Schubtank ein dediziertes Druckaufbausystem umfasst, das aus einer Druckleitung (215) gebildet ist, die an einem Ende mit der Flüssigkeit des Schubtanks und am anderen Ende mit dem Dampf des Schubtanks fluidmäßig gekoppelt ist, wobei das dedizierte Druckaufbausystem auch einen zweiten Verdampfer (220) umfasst, der entlang der Druckleitung positioniert ist, um Flüssigkeit aus dem Schubtank zu verdampfen und die verdampfte Flüssigkeit zurück zu dem Dampf in dem Schubtank zu leiten, um den Schubtank unter Druck zu setzen;
und wobei das System ferner Folgendes umfasst:
einen Kompressorverteiler (305) zu der Vielzahl von Versorgungstanks, wobei der Kompressorverteiler fluidmäßig parallel mit dem Dampfverteiler gekoppelt ist; und
einen Kompressor (315), der fluidmäßig zwischen der Verbrauchsleitung und einer Leitung (310) des Kompressorverteilers gekoppelt ist, und so dass der Kompressor selektiv mit jeder Dampfleitung koppelbar ist,
wobei der Kompressor konfiguriert ist, wenn er an eine Dampfleitung von einem der Vielzahl von Versorgungstanks gekoppelt ist, wobei der Versorgungstank flüssigkeitsleer ist, um die Dampfleitung drucklos zu machen und dadurch Restdampf aus dem Versorgungstank zum Kompressor zu leiten, um den Restdampf aus dem Versorgungstank in die Nutzleitung zu zwingen, so dass der Versorgungstank drucklos gemacht wird.

2. System nach Anspruch 1, wobei jeder der Versorgungstanks ein ISO-Tank (Internationale Organisation zur Standardisierung) ist.

3. System nach Anspruch 1 oder 2, wobei jeder Versorgungstank ein Druckaufbausystem umfasst, das aus einer Druckleitung (125) gebildet ist, die an einem Ende mit der Flüssigkeit des Versorgungstanks und am anderen Ende mit dem Dampf des Versorgungstanks fluidmäßig verbunden ist, das Druckaufbausystem auch einen Verdampfer umfasst, der entlang der Druckleitung positioniert ist, um Flüssigkeit aus dem Versorgungstank zu verdampfen und um die verdampfte Flüssigkeit zurück zu dem Dampf in dem Versorgungstank zu leiten, um den Versorgungstank unter Druck zu setzen.

4. System nach einem der vorhergehenden Ansprüche, wobei der Kompressorverteiler den Dampfverteiler fluidmäßig mit dem Kompressor koppelt, so dass der Kompressor die Dampfleitungen der Versorgungstanks unter Druck setzen kann.

5. System nach einem der vorhergehenden Ansprüche, wobei der zweite Verdampfer ein Wärmetauscher ist.

6. System nach einem der vorhergehenden Ansprüche, wobei der erste Schubverdampfer ein Wärmetauscher ist.

7. System nach einem der vorhergehenden Ansprüche, ferner umfassend mindestens einen Druckregler an der Druckleitung des Schubtanks.

8. System nach einem der vorhergehenden Ansprüche, wobei das kryogene Fluid flüssiges Erdgas ist.

9. System nach einem der vorhergehenden Ansprüche, wobei sich die Druckleitung des Schubtanks von der Flüssigkeit im Schubtank nach unten erstreckt.

## Revendications

1. Système d'alimentation en fluide cryogénique, comprenant :
une pluralité de réservoirs d'alimentation cryogéniques (50), dans lequel chaque réservoir d'alimentation comporte :
a. un liquide cryogénique (120) et une vapeur (110) au-dessus du liquide ;
b. une conduite de vapeur (105) ayant une première extrémité couplée fluidiquement avec la vapeur du réservoir ;
c. une conduite de liquide (115) ayant une première extrémité couplée fluidiquement avec le liquide du réservoir ;
un réservoir de poussée (100) conçu pour fournir une pression de vapeur aux réservoirs d'alimentation et qui contient un liquide cryogénique et une vapeur au-dessus du liquide ;
un collecteur de vapeur (205) qui couple fluidiquement les conduites de vapeur des réservoirs d'alimentation les unes aux autres et couple également fluidiquement les conduites de vapeur des réservoirs d'alimentation à une conduite de poussée (240) couplée fluidiquement avec le liquide du réservoir de poussée, la conduite de poussée comportant un premier vaporisateur de poussée (245) conçu pour vaporiser un liquide provenant du réservoir de poussée ; et
un collecteur de liquide (210) qui couple fluidiquement les conduites de liquide des réservoirs d'alimentation les unes aux autres, dans lequel le collecteur de liquide se couple fluidiquement avec une conduite d'utilisation (130) qui est configurée pour être raccordée à un dispositif d'utilisation afin de distribuer un liquide cryogénique depuis les réservoirs d'alimentation lorsqu'ils sont ainsi raccordés,
dans lequel le réservoir de poussée comporte un système d'accumulation de pression dédié formé d'une conduite de pression (215) couplée fluidiquement sur une extrémité avec le liquide du réservoir de poussée, et sur une autre extrémité avec la vapeur du réservoir de poussée, le système d'accumulation de pression dédié comportant également un second vaporisateur (220) positionné le long de la conduite de pression pour vaporiser un liquide provenant du réservoir de poussée et rediriger le liquide vaporisé vers la vapeur dans le réservoir de poussée pour mettre sous pression le réservoir de poussée ;
et dans lequel le système comprend en outre :
un collecteur de compresseur (305) vers la pluralité de réservoirs d'alimentation, le collecteur de compresseur étant couplé fluidiquement en parallèle avec le collecteur de vapeur ; et
un compresseur (315) couplé fluidiquement entre la conduite d'utilisation et une conduite (310) du collecteur de compresseur, et de sorte que le compresseur peut être couplé sélectivement à chaque conduite de vapeur,
dans lequel le compresseur est configuré, lorsqu'il est couplé à une conduite de vapeur de l'un de la pluralité de réservoirs d'alimentation, lequel réservoir d'alimentation est dépourvu de liquide, pour dépressuriser la conduite de vapeur et ainsi diriger une vapeur résiduelle depuis le réservoir d'alimentation vers le compresseur de manière à forcer la vapeur résiduelle depuis le réservoir d'alimentation vers la conduite d'utilisation, de sorte que le réservoir d'alimentation est dépressurisé.

2. Système selon la revendication 1, dans lequel chacun des réservoirs d'alimentation est un réservoir ISO (Organisation internationale de normalisation).

3. Système selon la revendication 1 ou 2, dans lequel chaque réservoir d'alimentation comporte un système d'accumulation de pression formé d'une conduite de pression (125) qui se couple fluidiquement sur une extrémité avec le liquide du réservoir d'alimentation, et sur une autre extrémité avec la vapeur du réservoir d'alimentation, le système d'accumulation de pression comportant également un vaporisateur positionné le long de la conduite de pression pour vaporiser un liquide provenant du réservoir d'alimentation et rediriger le liquide vaporisé vers la vapeur dans le réservoir d'alimentation pour mettre sous pression le réservoir d'alimentation.

4. Système selon une quelconque revendication précédente, dans lequel le collecteur de compresseur couple fluidiquement le collecteur de vapeur au compresseur de sorte que le compresseur peut mettre sous pression les conduites de vapeur des réservoirs d'alimentation.

5. Système selon une quelconque revendication précédente, dans lequel le second vaporiseur est un échangeur de chaleur.

6. Système selon une quelconque revendication précédente, dans lequel le premier vaporiseur de poussée est un échangeur de chaleur.

7. Système selon une quelconque revendication précédente, comprenant en outre au moins un régulateur de pression sur la conduite de pression du réservoir de poussée.

8. Système selon une quelconque revendication précédente, dans lequel le fluide cryogénique est un gaz naturel liquide.

9. Système selon une quelconque revendication précédente, dans lequel la conduite de pression du réservoir de poussée s'étend vers le bas depuis le liquide dans le réservoir de poussée.
